# EUROPEAN PATENT APPLICATION

(11) **EP 3 876 085 A1**
(43) Date of publication of application: **08.09.2021**
(21) Application number: 21160311.3
(22) Date of filing: 02.03.2021
(51) Int. Cl.: G06F 3/0481, G06F 3/0482, G06F 9/451, G06F 9/445

(54) **SELF-LEARNING DIGITAL INTERFACE**

(30) Priority: 03.03.2020 US 202016808184
(71) Applicant: InvestCloud Inc., Los Angeles, CA 90069 (US)
(72) Inventor: Sos-Munoz, Vicent, Los Angeles, California CA 90069 (US); Wise, John W., Los Angeles, California CA 90069 (US); Achinfiev, Alex, Los Angeles, California CA 90069 (US)
(74) Representative: Franks & Co Limited

(57) **Abstract**

A computer program product comprises a non-transitory computer useable storage device having a computer readable program. The computer readable program when executed on a server computer causes the server computer to receive, with a receiver through a network, user activity data with respect to a widget layout rendered by a graphical user interface. The widget layout indicates an order for a plurality of widgets within the graphical user interface. Furthermore, the server computer is caused to determine, with a processor at an augmented intelligence system, a widget-of-interest to a user based on the user activity data. Finally, the server computer is caused to automatically adapt the widget layout based upon the widget-of-interest.

## Description

### BACKGROUND

### 1. Field

This disclosure generally relates to the field of computing systems. More particularly, the disclosure relates to user interfaces for computing devices.

### 2. General Background

Recent advances in technology have led to increased usage of mobile computing devices (e.g., smartphones, tablet devices, smart watches, smart bracelets, etc.), which typically have touch-screen functionality. A user may provide one or more touch-based inputs, such as with a finger swipe, to navigate through a graphical user interface ("GUI") rendered by the corresponding computing device. For example, the GUI may display various features of a software application. The user's tactile inputs allow the user to visually interact with the software application to request various services of the software application.

Although mobile computing devices provide the convenience of portability of access to the foregoing software applications, a feature not present with previous desktop computing devices (e.g., personal computer ("PC")), such mobile computing devices often have much more limited display screen space than a desktop computing device. As an example, a typical smartphone display screen may be approximately one-tenth of the size of a display screen used by a desktop computing device.

Consequently, a user is often left having to spend much more time navigating through a mobile device GUI, which can only accommodate the rendering of so much content at any particular point in time, than with a display device used in conjunction with a desktop computing device, which can often times present an entire snapshot of data that would typically necessitate multiple user swipes on a mobile computing device. To further complicate matters, a user may have to swipe back and forth on the mobile device GUI to view data that is of interest to the user, but that is located in different portions (e.g., one visible and one hidden) of the mobile device GUI. For example, a user may view one feature of the software application, provide three or four swipes to get to another feature of interest, and then swipe back-and-forth to the different features.

The foregoing navigation of mobile device GUIs reflects a trade-off between usage of mobile computing devices and desktop computing devices: portability as opposed to ease-of-use. And that trade-off often has led to many users maintaining the need for both a mobile computing device and a desktop computing device.

### SUMMARY

In one aspect of the disclosure, a computer program product is provided. The computer program product comprises a non-transitory computer useable storage device having a computer readable program. The computer readable program when executed on a server computer causes the server computer to receive, with a receiver through a network, user activity data with respect to a widget layout rendered by a GUI. The widget layout indicates an order for a plurality of widgets within the graphical user interface. Furthermore, the server computer is caused to determine, with a processor at an augmented intelligence system, a widget-of-interest to a user based on the user activity data. Finally, the server computer is caused to automatically adapt the widget layout based upon the widget-of-interest.

In another aspect of the disclosure, another computer readable program, when executed on a mobile computing device, causes the mobile computing device to receive, with a receiver through a network, a widget layout, which indicates an order for a plurality of widgets within a GUI. Furthermore, the mobile computing device is caused to render, at a display device integrated within the mobile computing device, the widget layout. The mobile computing device is also caused to obtain user activity data with respect to the widget layout during the rendering. Additionally, the mobile computing device is caused to transmit, with a transmitter, the user activity data to an augmented intelligence system that generates an adapted widget layout according to the user activity data. Moreover, the mobile computing device is caused to receive, with the receiver, the adapted widget layout. Finally, the mobile computing device is caused to render, with the display device, the adapted widget layout.

According to another aspect of the disclosure, there is provided a computer program product comprising a non-transitory computer useable storage device having a computer readable program, wherein the computer readable program when executed on a server computer causes the server computer to:
receive, with a receiver through a network, user activity data with respect to a widget layout rendered by a graphical user interface, the widget layout indicating an order for a plurality of widgets within the graphical user interface;
determine, with a processor at an augmented intelligence system, a widget-of-interest to a user based on the user activity data; and
automatically adapt the widget layout based upon the widget-of-interest.

Preferably, the server computer is further caused to render the adapted widget layout upon a subsequent return to the graphical user interface after an exit of the graphical user interface.

Preferably, the server computer is further caused to render the adapted widget layout in real-time during a user view of the graphical user interface.

Preferably, the adapted widget layout has an adapted widget prominence.

Preferably, the adapted widget layout has a cross-widget update.

Preferably, the adapted widget layout has an in-widget preselected feature.

Preferably, the adapted widget layout has an additional content selection.

Preferably, the server computer is further caused to store, at a memory device, the user activity in a user interaction table.

Preferably, the server computer is further caused to perform machine learning by comparing at least a portion of the data stored in the user interaction table with one or more statistical samples of previous interaction data stored in a previous interaction database, the previous interaction data corresponding to user activity of a prior interactive session.

Preferably, the adapted widget layout is based on the machine learning.

Preferably, the server computer is further caused to receive, with the receiver through the network, the widget layout from an author computing device prior to said automatic adaptation of the widget layout.

Preferably, the server computer is further caused to generate, with the processor, the widget layout prior to said automatic adaptation of the widget layout.

According to a further aspect of the disclosure, there is provided a computer program product comprising a non-transitory computer useable storage device having a computer readable program, wherein the computer readable program when executed on a mobile computing device causes the mobile computing device to:
receive, with a receiver through a network, a widget layout indicating an order for a plurality of widgets within a graphical user interface;
render, at a display device integrated within the mobile computing device, the widget layout;
obtain user activity data with respect to the widget layout during said rendering;
transmit, with a transmitter, the user activity data to an augmented intelligence system that generates an adapted widget layout according to the user activity data;
receive, with the receiver, the adapted widget layout; and
render, with the display device, the adapted widget layout.

Preferably, the mobile computing device is further caused to obtain the user activity data by performing image capture, with an image capture device, of a user interaction with the widget layout during said rendering of the widget layout.

Preferably, the mobile computing device is further caused to obtain the user activity data by performing audio capture, with an audio capture device, of a user interaction with the widget layout during said rendering of the widget layout.

Preferably, the mobile computing device is further caused to obtain the user activity data by receiving one or more tactile inputs corresponding to a user interaction with the widget layout during said rendering of the widget layout.

Preferably, the mobile computing device is further caused to obtain the user activity data by sensing, with a sensor, one or more reactions of a user to the widget layout during said rendering of the widget layout.

Preferably, the sensor is selected from the group consisting of: an accelerometer, a gyroscope, and a magnetometer.

Preferably, the mobile computing device is further caused to render the adapted widget layout upon a subsequent return to the graphical user interface after an exit of the graphical user interface.

Preferably, the mobile computing device is further caused to render the adapted widget layout in real-time during a user view of the graphical user interface.

An apparatus or a system may also perform the processes executed by the foregoing computer readable programs.

### BRIEF DESCRIPTION OF THE DRAWINGS

The above-mentioned features of the present disclosure will become more apparent with reference to the following description taken in conjunction with the accompanying drawings wherein like reference numerals denote like elements and in which:
Fig. 1 illustrates a self-learning digital interface environment that automatically performs adaptations to the layout of a GUI for rendering on an end-user computing device.
Fig. 2A illustrates a system configuration for the author layout computing device.
Fig. 2B illustrates a system configuration for the application server, illustrated in Fig. 1.
Fig. 2C illustrates a system configuration for the end-user computing device, illustrated in Fig. 1.
Fig. 3 illustrates a user interaction table.
Fig. 4A illustrates the example of the author layout GUI allowing the author to provide a selection of various widget indicia for implementation in a financial services software application.
Fig. 4B illustrates a drag-and-drop GUI that allows the author to position various widget indicia in an order for intended consumption by the end-user.
Fig. 4C illustrates the positioning of the widget indicia within the drag-and-drop GUI.
Fig. 5A illustrates the end-user providing a touch-based input with respect to one of the widgets in the original widget layout.
Fig. 5B illustrates the end-user transitioning from the original GUI layout to another screen in the software application (or potentially logout), and return to an adapted GUI layout, which prioritizes the interest of the end-user through a resorted widget layout.
Fig. 5C illustrates the end-user transitioning from the original GUI layout, to another screen in the software application (or potentially logout), and return to an adapted GUI layout, which expands the size of the widget of interest to the end-user and minimizes the size of the widgets that are not of interest to the end-user.
Figs. 6A illustrates the user viewing a news widget that depicts a sporting event.
Fig. 6B illustrates the widget layout updating the news widget to reflect news on sports, rather than sporting equities.
Fig. 7 illustrates a user activity capture configuration in which video and audio may be captured by the end user computing device to allow the augmented intelligence system adapt the widget layout GUI to the interests of the end-user.
Fig. 8 illustrates a process that may be utilized by the application server, illustrated in Fig. 1, to automatically adapt the widget layout GUI.
Fig. 9 illustrates a process that may be utilized by the end-user mobile computing device, illustrated in Fig. 1, to render the original widget layout GUI and the adapted widget layout GUI.

### DETAILED DESCRIPTION

A self-learning digital interface is provided to allow computing devices to adapt to particular users. For instance, an augmented intelligence system may determine, based on a particular user's interactions with a computing device GUI, which widgets of the GUI are of the most interest to the user. As a result, the augmented intelligence system may adapt the layout of a particular software application based on which widgets the augmented intelligence system determines would be of viewing interest to that particular user. The adaptation of the layout may be manifested in a variety of different ways, such as widget prominence, cross-widget updates, in-widget preselected features, and additional content selection.

The augmented intelligence system may learn the behavior of a particular user through a variety of different methodologies. For example, the augmented intelligence system may analyze a user's active, as opposed to passive, interactions with the computing device GUI. For instance, the amount of time that a user spends providing active inputs (e.g., scrolling, swiping, sliding, clicking on links, etc.) may be recorded as active interactions; whereas, the amount of idle time (e.g., no tactile or voice inputs) may be recorded as passive interactions - potentially indicating that the user is performing another activity other than interacting with the computing device GUI.

As another example, the augmented intelligence system may learn time-based patterns of the user, and adapt the digital interface based on those patterns. For instance, the augmented intelligence system may determine that the user views one particular type of content on Mondays as opposed to Tuesdays, during works hours as opposed to off-work hours, etc.

As yet another example, the augmented intelligence system may perform data capture of the user's interactions with the computing device, and adapt the digital interface based on those interactions. The data capture may be video, audio, and/or tactile interactions. For instance, the gaze of the user at a particular widget, and potentially the voice of the user making a positive, as opposed to a negative, remark during that gaze, may lead the augmented intelligence system to a conclusion that the widget is of interest to the user.

As another example, the augmented intelligence system determines a probability that a particular widget is of interest to the user. For instance, the augmented intelligence system may have access to a user profile (indication various demographics information) of a user. Based on statistical sampling of other users with similarly situated demographics (e.g., age range, geographic location, profession, etc.), the augmented intelligence system may then determine the probability of the user being interested in a particular widget, and whether or not that probability exceeds a predetermined probability threshold for a determination that the widget is an adaptation candidate. The augmented intelligence system may make such a determination without any direct input from, or observation of, the user.

The self-learning digital interface is particularly useful for a mobile computing device. By adapting the layout of a mobile device GUI, which is often much more limited than a desktop device GUI, the augmented intelligence system is able to bring the widgets and/or widget features that are most important to the user front-and-center within the limited-space layout. In essence, the augmented intelligence system improves the usability of a mobile computing device by adapting the mobile device GUI layout to emphasize the most important widgets and/or widget features of a particular user over those of less importance; the net effect is a mobile computing device that is not only portable, but also effective in rendering widgets and/or widget features in a snapshot akin to that of a desktop computing device. As a result, a mobile computing device implementing the self-learning digital interface avoids the trade-off of previous configurations; both portability and ease-of-use may be achieved with a mobile computing device.

The term "widget" is referred to herein to mean a software component (e.g., applet, graphical control element, etc.), which may have a single or smaller task within an overall software application, such as which may be executed by a mobile computing device. The widget may be modular to allow for the software application be composed of multiple widgets.

Although the foregoing text describes the augmented intelligence system being used to adapt the self-learning digital interface in the context of a mobile computing device, as an alternative, the augmented intelligence system may be used to adapt the self-learning digital interface in the context of a desktop computing device; such adaptation effectively prioritizes interface data within the desktop device GUI, thereby improving the usability of the desktop computing device on a per-user basis.

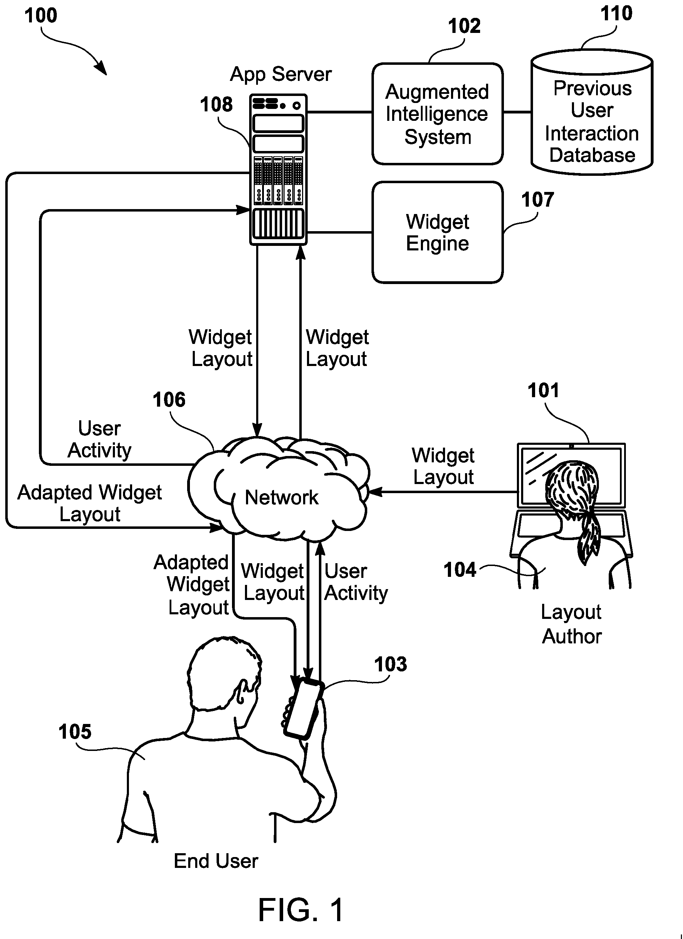

Fig. 1 illustrates a self-learning digital interface environment 100 that automatically performs adaptations to the layout of a GUI for rendering on an end-user computing device 103. In one embodiment, a widget layout for a GUI is generated by a layout author computing device 101 (desktop or mobile). A layout author 104 may prepare an original layout of the GUI that is intended to be rendered on the end-user computing device 103. As an example, a financial advisor may generate a layout for a financial services computer-implemented platform that is implemented by an application server 108. An end-user 105 (e.g., a client of the financial advisor) may then access, using an end-user computing device 103, the software application hosted by the application server 108. In particular, the end-user 105 may access the original widget layout prepared by the layout author 104. Based on data inputted/sensed/captured at the end-user mobile computing device 103, which is sent to an augmented intelligence system 102 through a network 106, the augmented intelligence system 102 is able to learn activities of the end-user 105 with respect to the original layout prepared by the layout author 104, and adapt the widget layout based upon the learned user activities. In an alternative embodiment, the widget layout may be automatically prepared without manual composition by the layout author 104. For example, the augmented intelligence system 102 may generate the original widget layout as, or for, a robo-advisor.

In one embodiment, the augmented intelligence system 102 is in operable communication with a previous user interaction database 110, which stores previous user interactions with a widget layout, particular widgets within the widget layout, and/or widget features. The augmented intelligence system 102 may compare current user interactions with particular widgets with previous interactions to determine if a particular widget is of interest. For example, a user may have accessed a particular widget a few times a week for the previous few months, which may indicate that current access for even a short period of time is still of interest to the end-user 105.

Furthermore, the application server 108 may be in operable communication with, or have integrated therein, a widget engine 107 that generates widgets corresponding to the widget layout. For example, the layout author 104 may indicate that the widget layout should include a financial news widget. Accordingly, the widget engine 107 may generate a widget, such as an applet, that displays current financial news within the GUI displayed by the end-user computing device 103.

In one embodiment, the adapted layout is viewed by the end-user upon a subsequent usage of the software application. For example, the end-user 105 may exit a screen displaying the widgets in the widget layout, as rendered by the end-user computing device 103, switch to a different screen (e.g., account settings screen), and return to the widget screen. Upon return to the widget screen, the adapted layout may be rendered by the end-user computing device 103. In another embodiment, the augmented intelligence system 102 performs a dynamic, real-time adaptation to allow the end-user computing device 103 to render an adapted widget layout upon detection of end-user activity. To minimize disruption to the user experience, the augmented intelligence system 102 may perform such adaptation within a predetermined time interval (e.g., after five minutes of monitoring end-user activity).

Although an example is provided with respect to use of the self-learning digital interface environment 100 with respect to financial services computer-implemented platforms, it may be used in a variety of other contexts as well. For example, the self-learning digital interface environment 100 may be used with a variety of software applications including, but not limited to, insurance, healthcare, sports, media, entertainment, and/or other computer-implemented platforms in which content is consumed and interacted with by an end-user 105 via an end-user computing device 103.

In the embodiment illustrated in Fig. 1, the self-learning digital interface environment 100 is a cloud-based configuration. In another embodiment, the self-learning digital interface environment 100 may be implemented in a local configuration. For instance, the end-user computing device 103 may have an integrated augmented intelligence system 102 and an integrated widget engine 107. The end-user computing device 103 may then communicate directly with the author computing device 101. As examples, the end-user computing device 103 may communicate wirelessly with the author computing device 101 through various communication protocols (e.g., Near Field Communication ("NFC"), BLUETOOTH, etc.). For instance, the end-user 105 may be a client that is visiting the office of his or her financial advisor, who is the author 104. Accordingly, the end-user computing device 103 may communicate directly with the author computing device 101 to directly obtain the original widget layout, which may be subsequently adapted by the end-user computing device 103. In an alternative embodiment, the self-learning digital interface environment 100 is a hybrid configuration, partially cloud-based and partially local.

Finally, in one embodiment, the end-user 105 may provide a user input that resets the widget layout to the original layout generated by the author 104; such input may be used as feedback for the augmented intelligence system 102 to let it know that it should reconsider how it is assessing the user's activities with respect to the layout GUI.

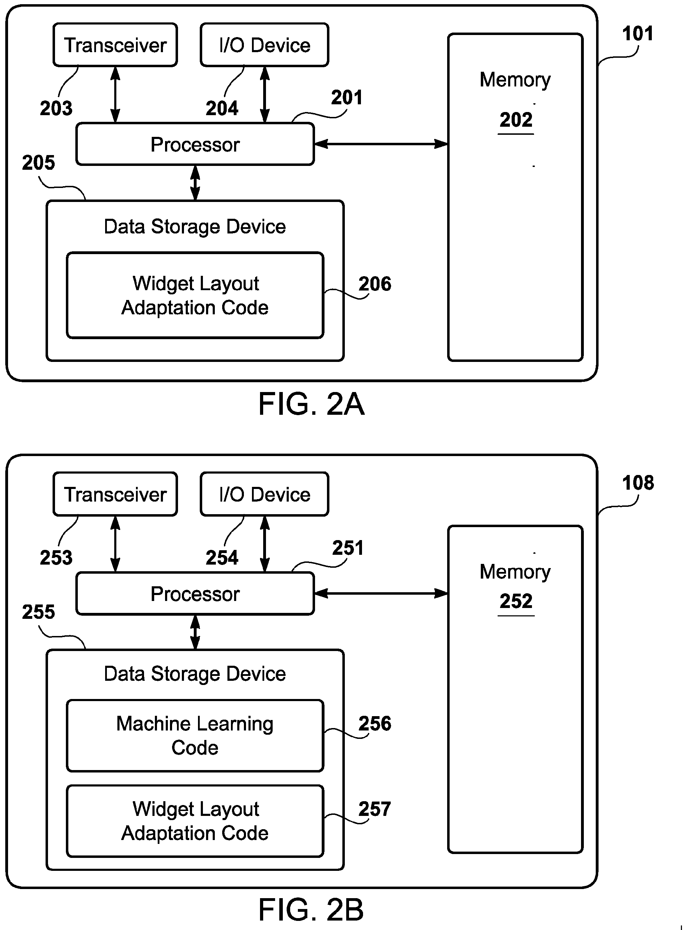

Figs. 2A-2C illustrate system configurations for the various componentry of the self-learning digital interface environment 100 illustrated in Fig. 1. In particular, Fig. 2A illustrates a system configuration for the author layout computing device 101. A processor 201, which may be specialized for widget layout generation may be used to perform the operations illustrated in Fig. 1 for generating and implementing a widget layout. In essence, the widget layout is an arrangement, which may be predetermined or determined on-the-fly, of widgets for a GUI. The widget layout may indicate relative positioning of widgets with respect to one another and/or with respect to other objects within the GUI. Alternatively, the widget layout may indicate static values, such as pixel values.

The system configuration may also include a memory device 202, which may temporarily store computer readable instructions performed by the processor 201. As an example of such computer readable instructions, a data storage device 205 within the system configuration may store widget layout generation code 206. In one embodiment, the processor 201 may execute the widget layout generation code 206 to provide an authoring GUI in which the author 104 may position various widget indicia according to the intended layout. For example, the author 104 may utilize the authoring GUI to drag-and-drop the widget indicia into various positions to formulate the widget layout. In another embodiment, the processor 201 may execute the widget layout generation code 206 to automatically recommend a predetermined layout for the author 104. For example, the processor 201 may perform an analysis on an author profile and/or an end-user profile to automatically pre-generate the widget layout for the author 104. Furthermore, the author 104 may interact with the pre-generated widget layout to modify the pre-generated widget layout into the widget layout that the author 104 wants to send to the end-user 105, thereby providing an improved author interaction experience with the authoring computing device 101.

Moreover, the system configuration may have one or more input/output ("I/O") devices 204 that may receive inputs and provide outputs. Various devices (e.g., keyboard, microphone, mouse, pointing device, hand controller, joystick, etc.) may be used for the I/O devices 204. The system configuration may also have a transceiver 203 to send and receive data. Alternatively, a separate transmitter and receiver may be used instead.

By way of contrast, Fig. 2B illustrates a system configuration for the application server 108, illustrated in Fig. 1. A processor 201, which may be specialized for machine learning and widget layout adaptation, may be used to perform the operations illustrated in Fig. 1 for widget layout adaptation based on activities of the end-user 105 with respect to the widget layout.

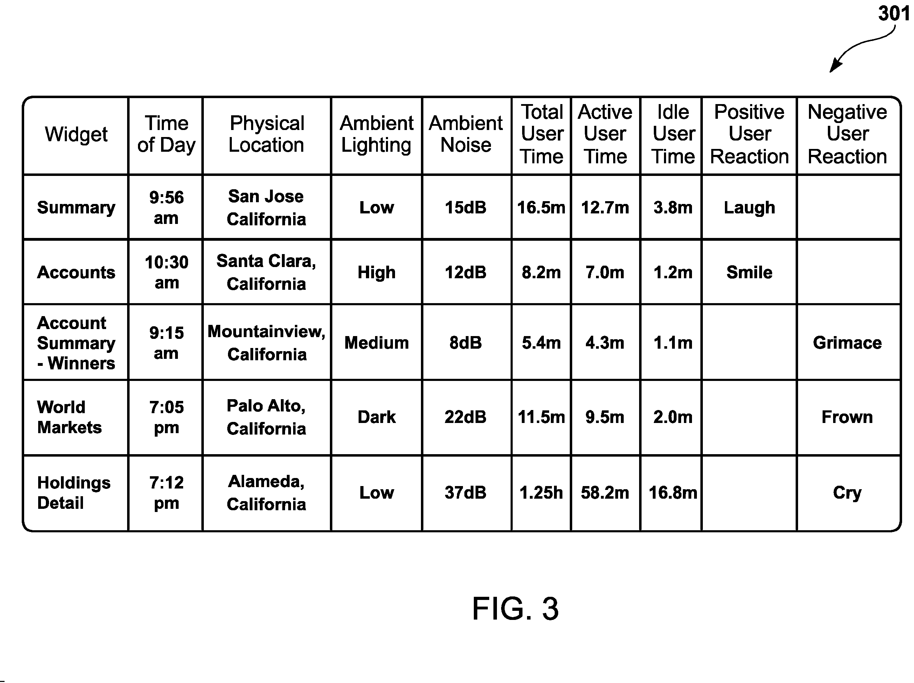

The system configuration may also include a memory device 252, which may temporarily store computer readable instructions performed by the processor 251. As an example of such computer readable instructions, a data storage device 255 within the system configuration may store machine learning code 256 and widget layout adaptation code 257. In one embodiment, the processor 251 may execute the machine learning code 256 to learn which widget layout adaptations are most suitable for a particular user. For example, the processor 251 may determine, based upon monitoring a particular user's interactions with various widget layouts and widget layout adaptations, which may be stored by the previous user interaction database 110 illustrated in Fig. 1, that particular layout adaptations lead to more prolonged periods of user interaction than others. For example, the processor 251 may analyze various fields of a user interaction table 301, illustrated in Fig. 3, to determine statistical effectiveness at implementing various layout adaptations; such fields may include total user time, active user time (swipes, scrolls, etc.), idle user time, positive user reaction, negative user reaction, and the like. Whether a reaction is positive or negative may be determined by a sensed/inputted data indication such as a reaction (recorded audio, text input, etc.). Examples of a reaction include, but are not limited to, laughing, crying, exuberance, dismay, etc. Furthermore, the user interaction table may indication the context of the reaction (e.g., time of day, day of week, real-world physical location as determined by Global Positioning System ("GPS") coordinates, type of ambient lighting, level of ambient noise, etc.). Accordingly, the end-user 105 may have a different reaction to the same widget when it is interacted with in a different context. Also, the user reaction table 301 may be utilized by the augmented intelligence system 102 to determine a probability of user interest based on previous statistical samples stored in the previous user interaction database 110, illustrated in Fig. 1. (The particular fields of the user reaction table 301 illustrated in Fig. 3 are provided only as examples, given that a variety of other fields may be utilized.) The user interaction table 301 may be temporarily stored in the memory device 252 to allow for efficient access by the processor 251 when performing a comparison with the previous user interaction database 110. Furthermore, the processor 251 may execute the widget layout adaptation code 257 to adapt the widget layout based on the probability of user interest determined via the machine learning code 256.

Moreover, the system configuration may have one or more input/output ("I/O") devices 254 that may receive inputs and provide outputs. Various devices (e.g., keyboard, microphone, mouse, pointing device, hand controller, joystick, etc.) may be used for the I/O devices 254. The system configuration may also have a transceiver 253 to send and receive data. Alternatively, a separate transmitter and receiver may be used instead.

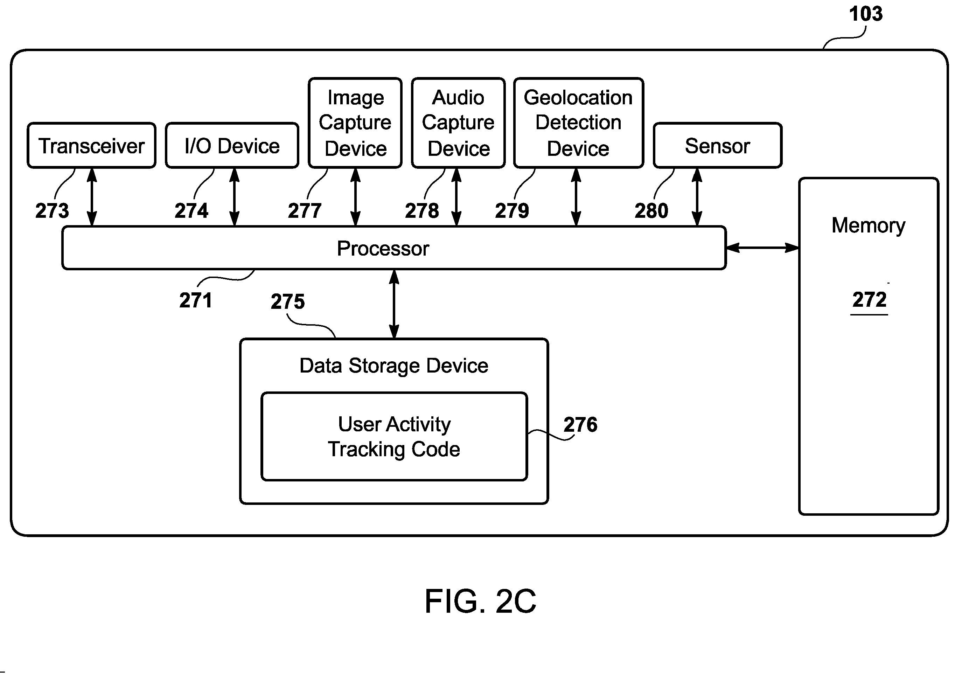

Additionally, Fig. 2C illustrates a system configuration for the end-user computing device 103, illustrated in Fig. 1. A processor 271, which may be specialized for tracking user activity, may be used to perform the operations illustrated in Fig. 1 to obtain the data that is utilized by the augmented intelligence system 102 to perform self-learning for purposes of widget layout adaptation.

The system configuration may also include a memory device 272, which may temporarily store computer readable instructions performed by the processor 271. As an example of such computer readable instructions, a data storage device 275 within the system configuration may store user activity tracking code 276. In one embodiment, the processor 271 may execute the user activity tracking code 276 to track activities of the user. In particular, the system configuration may have one or more image capture devices 277 (e.g., camera), audio capture devices (e.g., microphone) 278, geolocation detection device 279 (e.g., GPS), and sensors 280 (e.g., accelerometers, gyroscopes, magnetometers, etc.). Accordingly, the end-user computing device 103 may be utilized to track/monitor various data (e.g., eye gaze, pupil dilation, voice reactions, lack of device movement, etc.) that may be indicative or user interest or lack of user interest. For example, the image capture device 277 may capture the gaze of the eyes of the end-user 105 at a particular widget, the audio capture device 278 may capture a positive vocal expression, and the sensor 280 may indicate that the end-user 105 is holding the end-user computing device 103 relatively steady, in comparison with a baseline; all indications of strong user interest in the widget.

Moreover, the system configuration may have one or more input/output ("I/O") devices 274 that may receive inputs and provide outputs. Various devices (e.g., keyboard, microphone, mouse, pointing device, hand controller, joystick, etc.) may be used for the I/O devices 274. The system configuration may also have a transceiver 273 to send and receive data. Alternatively, a separate transmitter and receiver may be used instead.

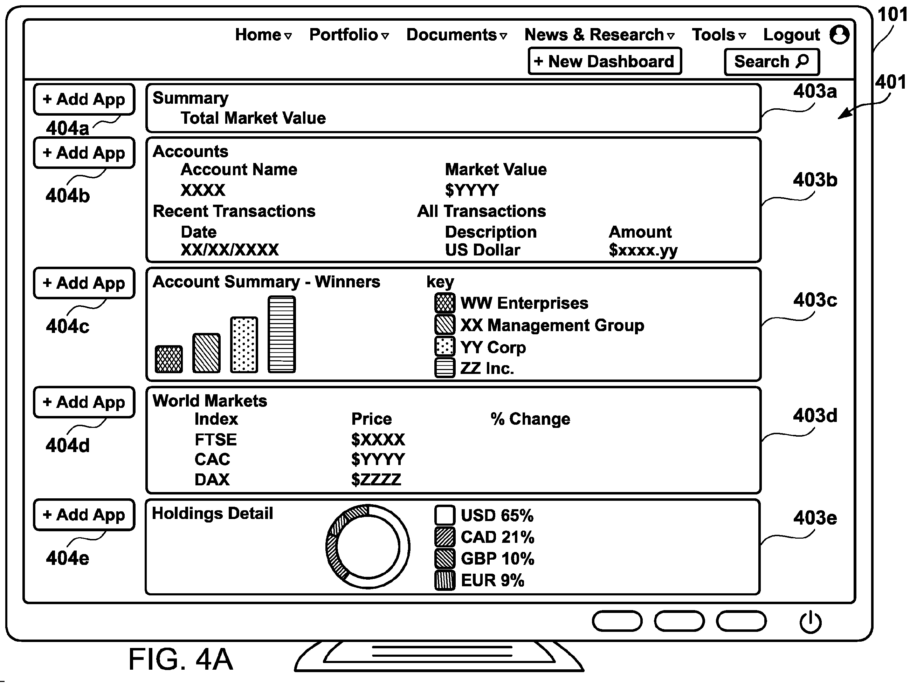

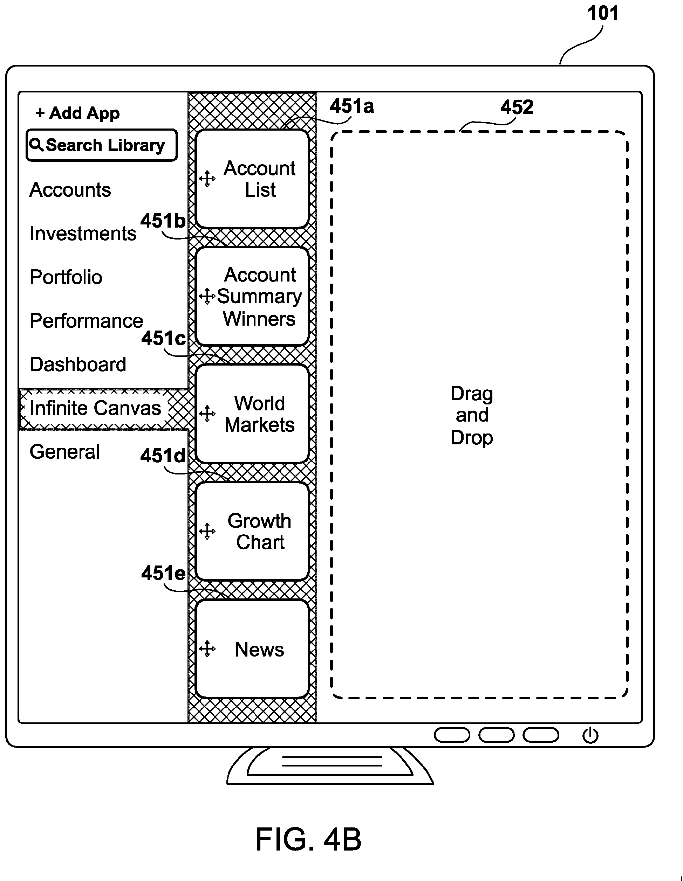

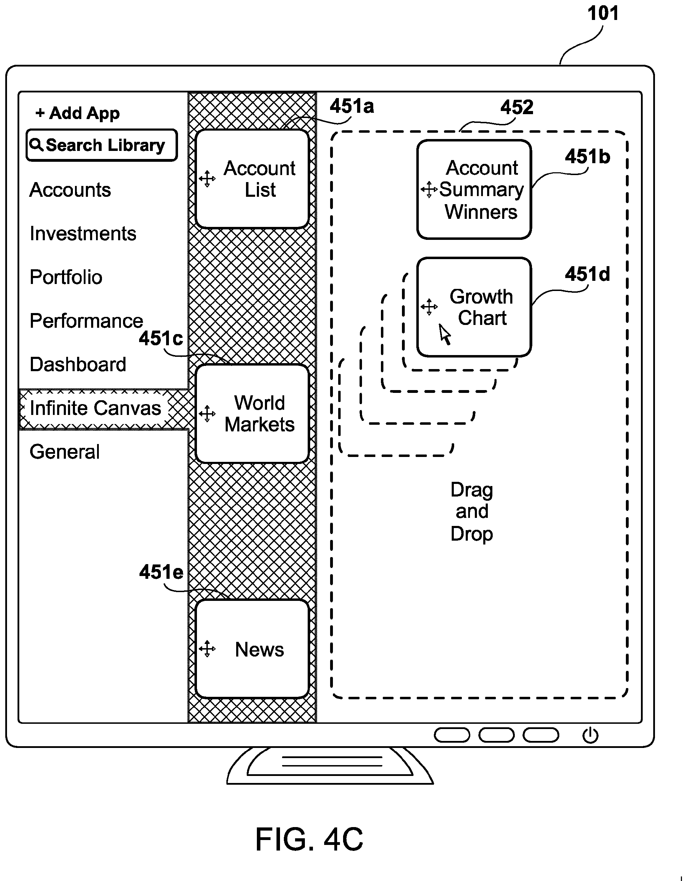

Figs. 4A-4C illustrate an example of an author layout GUI 401 that is generated at the author computing device 101, illustrated in Fig. 1. In particular, the Fig. 4A illustrates the example of the author layout GUI allowing the author 104 to provide a selection of various widget indicia 404a-404e for implementation in a financial services software application. (The example of financial services is provided only as an example, given the applicability of the configurations provided for herein to other areas besides financial services.) For instance, the widget indicia may include a summary widget indicium 403a, an accounts widget indium 403b, an account summary winners indicium 403c, a world markets indicium 403d, and a holdings detail indicium 403e. (Various other indicia may be used in addition or in the alternative.) In essence, the author 104 may view the various widgets from a desktop computing device, or potentially a mobile computing device, and determine which widgets should be included by various corresponding addition indicia 404a-404e. Furthermore, as illustrated in Fig. 4B, once the widgets are selected, a drag-and-drop GUI 452 allows the author 104 to position various widget indicia 451a-e in an order for intended consumption by the end-user 105. Fig. 4C illustrates the positioning of the widget indicia 451a-e within the drag-and-drop GUI 452.

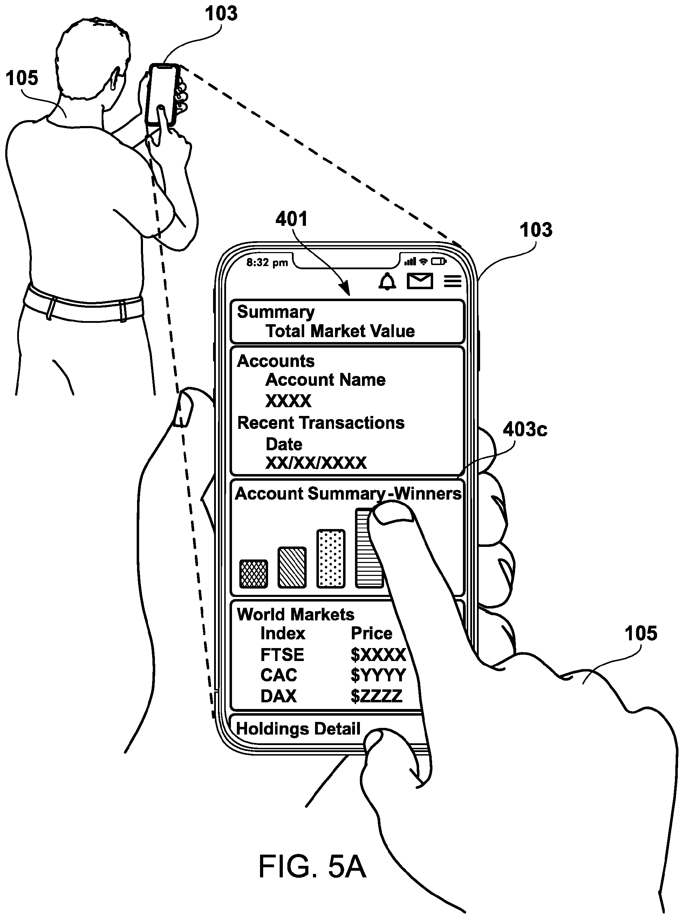

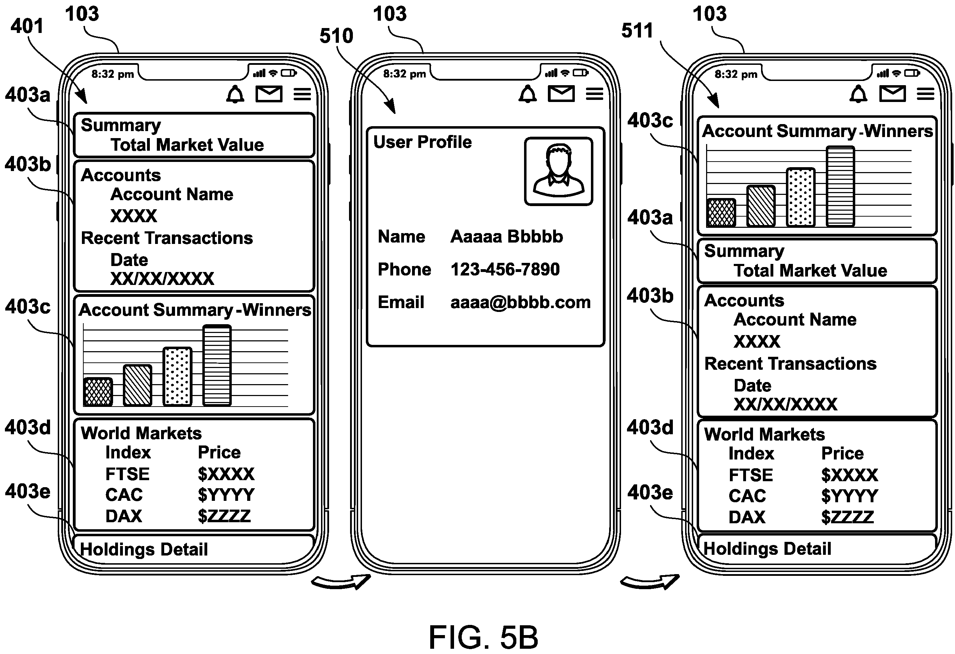

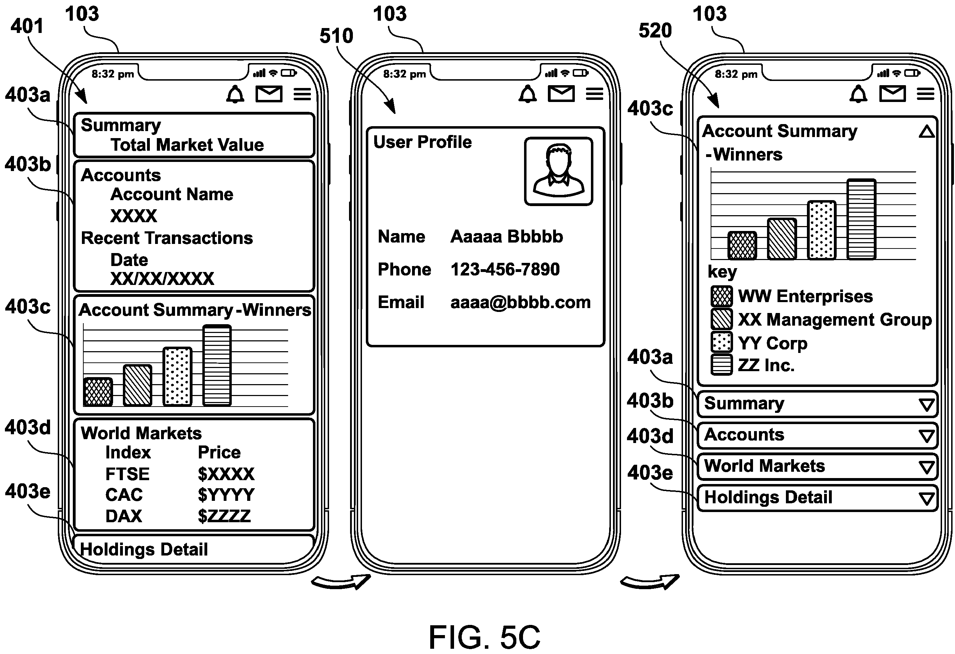

Moreover, Figs. 5A-5C illustrate an example of the end-user 105 interacting with the original widget layout, as generated by the author computing device 101 illustrated in Figs. 4A-4C. In particular, Fig. 5A illustrates the end-user 105 providing a touch-based input with respect to one of the widgets in the original widget layout. For example, the user 105 is utilizing a right index finger to interact with the widget 404c indicating the account summary; based on this tactile input and an amount of time recorded for such interaction, the augmented intelligence system 102 determines that the widget 404c is of particular interest to the end-user 105. For instance, the augmented intelligence system 102 may assign a score to each widget, of which the widget 404c may be the highest. Accordingly, the augmented intelligence system 102 may adapt the GUI layout 401 by resorting the order of the widgets according to the highest scores. In one embodiment, as illustrated in Fig. 5B, the end-user 105 may transition from the original GUI layout 401, to another screen 510 in the software application (or potentially logout), and return to an adapted GUI layout 511, which prioritizes the widget-of-interest 403c of the end-user 105 through a resorted widget layout 511. In another embodiment, instead of resorting the widgets, the augmented intelligence system 102 may maintain the order of the original widget layout 401, but emphasize the widget of interest, while also potentially deemphasizing the widgets that are not of interest to the end-user 105. For example, as illustrated in Fig. 5C, the end-user 105 may transition from the original GUI layout 401, to another screen 510 in the software application (or potentially logout), and return to an adapted GUI layout 520, which expands the size of the widget 404c of interest to the end-user 105 and minimizes the size of the widgets that are not of interest to the end-user 105. Accordingly, the examples illustrated in Figs. 5B and 5C illustrate two possible approaches for self-learning adaptations based on widget prominence. Other types of widget prominence (e.g., highlighting, fonts, colors, etc.) may be used in addition or in the alternative.

Although Figs. 5A-5C illustrates a widget layout update upon exit and return to the GUI layout 401, in an alternative embodiment, the widget layout update may be performed in real-time such that the end-user 105 views the updated widget layout prior to exiting the widget layout.

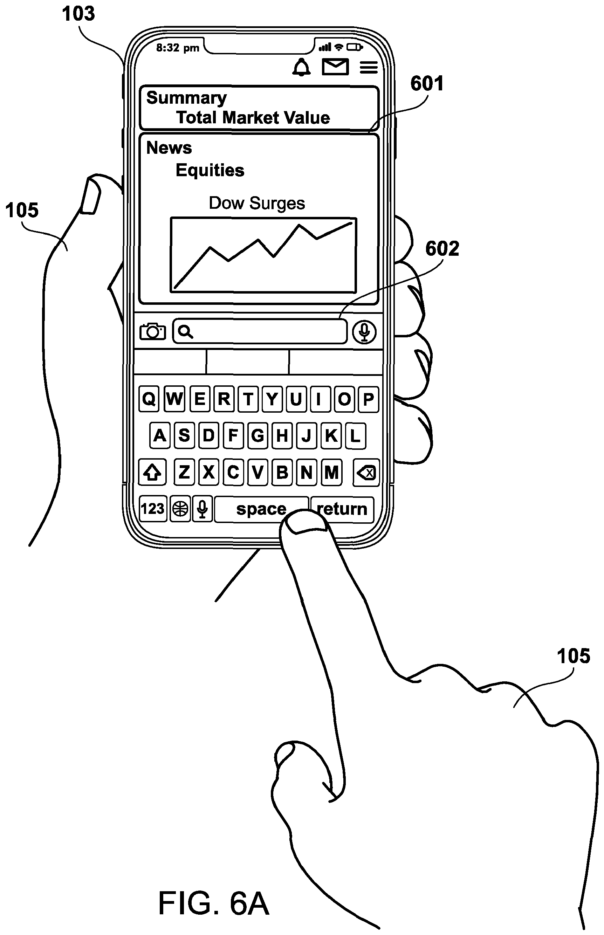

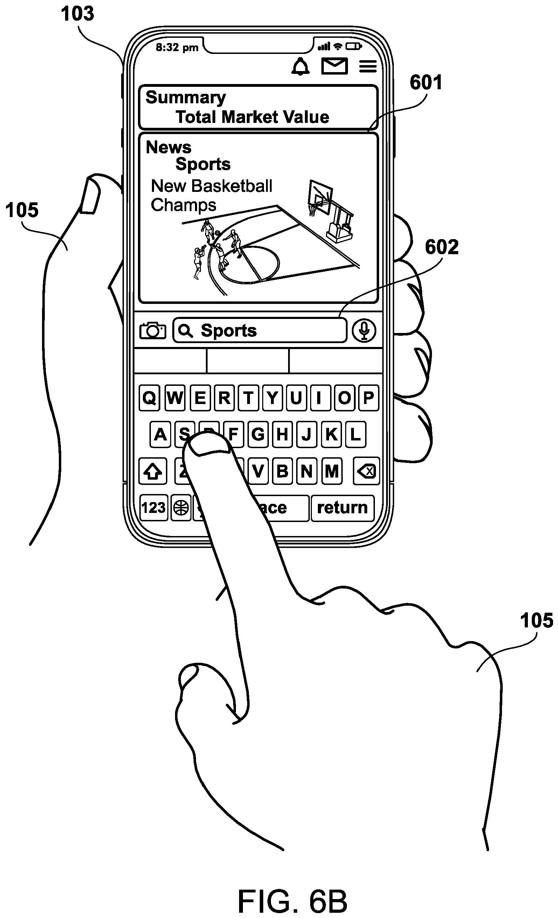

Figs. 6A and 6B illustrate an example of a cross-widget update. In particular, Figs. 6A illustrates the user viewing a news widget 601 that depicts equities news. During the rendering of the equities news, the end-user 501 provides a search input into a search widget 602. For instance, the search input may be directed toward sports. As a result, as illustrated in Fig. 6B, the widget layout is adapted to update the news widget 601 to reflect news on sporting news, rather than equities. In one embodiment, the update occurs in real-time at the conclusion of the search.

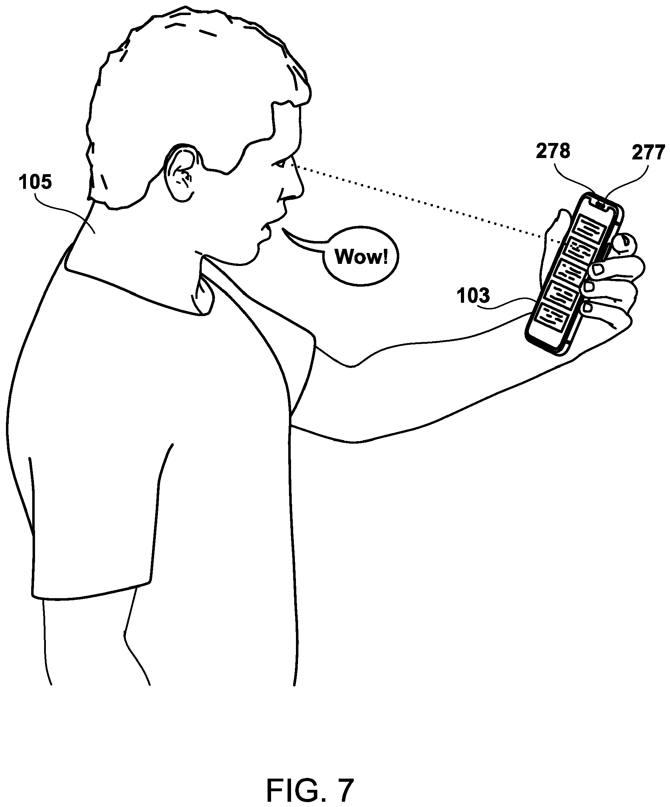

Other than touch-based inputs, various other forms of end-user activity detection may be utilized by the augmented intelligence system 102, illustrated in Fig. 1, to determine a widget-of-interest to the end user 105. For example, Fig. 7 illustrates a user activity capture configuration 700 in which video and audio may be captured by the end user computing device 103 to allow the augmented intelligence system 102 adapt the widget layout GUI to the interests of the end user 105. For instance, the image capture device 277 may capture imagery/video of the end user 105, and the audio capture device 278 may capture audio of the end user 105, during the interaction between the end user 105 and the widget layout GUI. As an example, the image capture device 277 may detect that the gaze of the eyes of the end user 105 are directed toward the account summary winners indicium 403c. Furthermore, the audio capture device 278 may detect a word or phrase of vocal elation (e.g., "wow"). Accordingly, even without much in the way of tactile input, the augmented intelligence system 102 is able to learn about the features that are of potential future interest to the end user 105.

Furthermore, any of the foregoing forms of end-user activity detection, potentially including tactile-based detection by itself or as an addition, may be utilized to perform feature selection within a particular widget. For instance, if the end-user 105 gazes at a particular tab in a widget, or non-widget portions of the widget layout GUI, the augmented intelligence system 102 may pre-select that tab as the initial tab selection when the tabs in the widget are subsequently displayed by the widget layout GUI.

Moreover, the foregoing forms of end-user activity detection may be utilized for new content selection. As an example, in an infinite scrolling configuration (e.g., via a smartphone display screen), the newer content for widgets, or the newer widgets themselves, may be selected by the augmented intelligence system 102 based on what the end-user 105 looked at or interacted with the most.

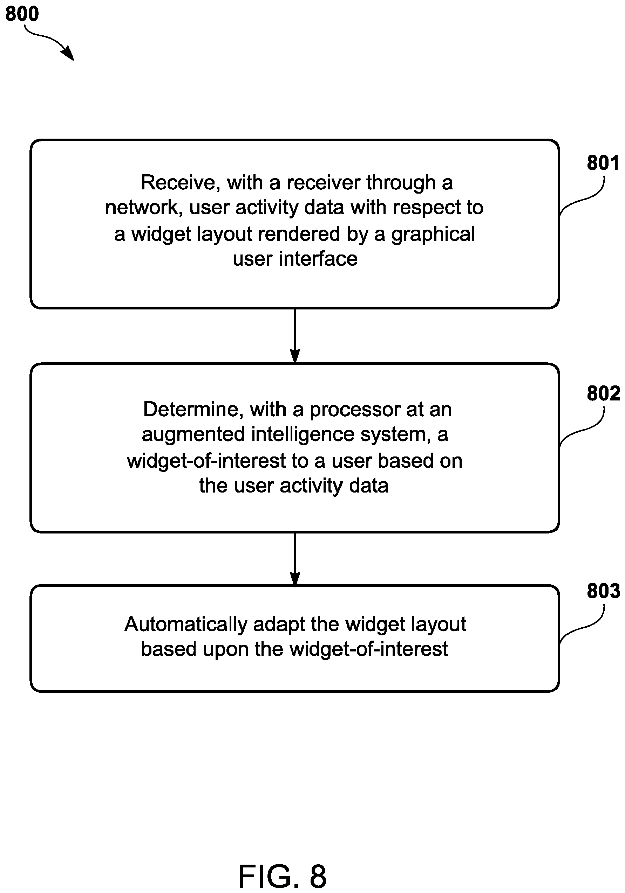

Fig. 8 illustrates a process 800 that may be utilized by the application server 108, illustrated in Fig. 1, to automatically adapt the widget layout GUI 103. At a process block 801, the process 800 receives, with a receiver through the network 106, user activity data with respect to a widget layout rendered by a GUI. The widget layout indicates an order for a plurality of widgets within the GUI. Furthermore, at a process block 802, the process 800 determines, with the processor 201 at an augmented intelligence system 102, a widget-of-interest to an end-user 105 based on the user activity data. Additionally, at a process block 803, the process 800 automatically adapts the widget layout based upon the widget-of-interest.

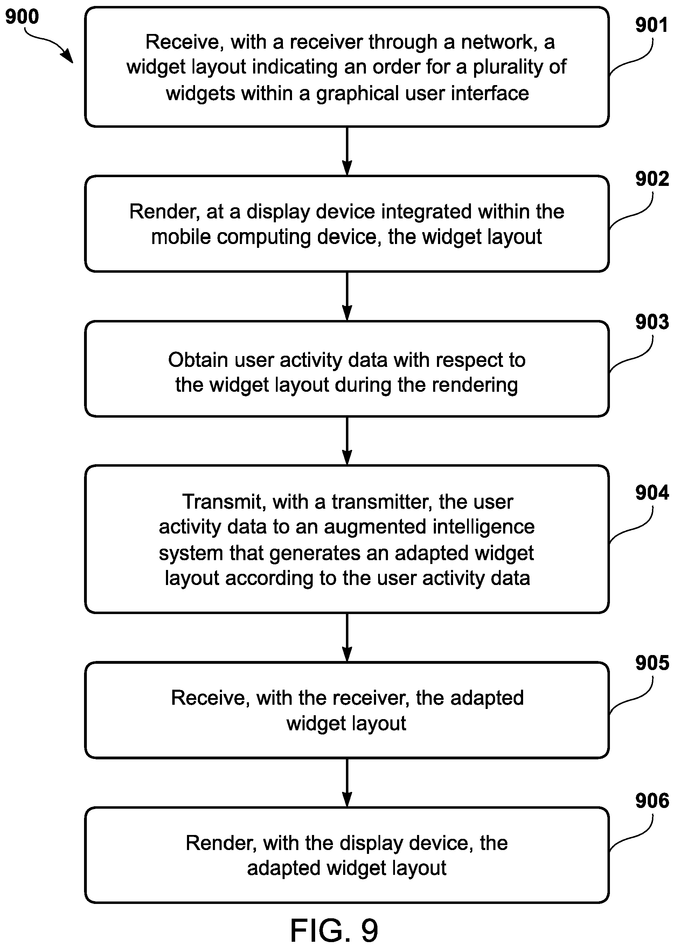

By way of contrast, Fig. 9 illustrates a process 900 that may be utilized by the end-user mobile computing device 103, illustrated in Fig. 1, to render the original widget layout GUI and the adapted widget layout GUI. At a process block 901, the process 900 receives, with a receiver through a network 106, a widget layout indicating an order for a plurality of widgets within a GUI. Furthermore, at a process block 902, the process 900 renders, at a display device integrated within the mobile computing device, the widget layout. Additionally, at a process block 903, the process 900 obtains user activity data with respect to the widget layout during the rendering. At a process block 904, the process 900 transmits, with a transmitter, the user activity data to an augmented intelligence system 102 that generates an adapted widget layout according to the user activity data. In addition, at a process block 905, the process 900 receives, with the receiver, the adapted widget layout. Finally, at a process block 906, the process 900 renders, with the display device, the adapted widget layout.

Although the configurations described herein have been exemplified through detection and monitoring of user activities with respect to a widget layout, the configurations are not limited to user activities with respect to widget layouts. For example, the configurations may be applied to content, features, menus, etc.

It is understood that the processes, systems, apparatuses, and computer program products described herein may also be applied in other types of processes, systems, apparatuses, and computer program products. Those skilled in the art will appreciate that the various adaptations and modifications of the embodiments of the processes, systems, apparatuses, and computer program products described herein may be configured without departing from the scope and spirit of the present processes and systems. Therefore, it is to be understood that, within the scope of the appended claims, the present processes, systems, apparatuses, and computer program products may be practiced other than as specifically described herein.

## Claims

1. A computer program product comprising a non-transitory computer useable storage device having a computer readable program, wherein the computer readable program when executed on a server computer causes the server computer to:
receive, with a receiver through a network, user activity data with respect to a widget layout rendered by a graphical user interface, the widget layout indicating an order for a plurality of widgets within the graphical user interface;
determine, with a processor at an augmented intelligence system, a widget-of-interest to a user based on the user activity data; and
automatically adapt the widget layout based upon the widget-of-interest.

2. The computer program product of claim 1, wherein the server computer is further caused to render the adapted widget layout upon a subsequent return to the graphical user interface after an exit of the graphical user interface.

3. The computer program product of claim 1, wherein the server computer is further caused to render the adapted widget layout in real-time during a user view of the graphical user interface.

4. The computer program product of claim 1, wherein the adapted widget layout has an adapted widget prominence.

5. The computer program product of claim 1, wherein the adapted widget layout has a cross-widget update.

6. The computer program product of claim 1, wherein the adapted widget layout has an in-widget preselected feature.

7. The computer program product of claim 1, wherein the adapted widget layout has an additional content selection.

8. The computer program product of claim 1, wherein the server computer is further caused to store, at a memory device, the user activity in a user interaction table.

9. The computer program product of claim 8, wherein the server computer is further caused to perform machine learning by comparing at least a portion of the data stored in the user interaction table with one or more statistical samples of previous interaction data stored in a previous interaction database, the previous interaction data corresponding to user activity of a prior interactive session.

10. The computer program product of claim 9, wherein the adapted widget layout is based on the machine learning.

11. The computer program product of claim 1, wherein the server computer is further caused to receive, with the receiver through the network, the widget layout from an author computing device prior to said automatic adaptation of the widget layout.

12. The computer program product of claim 1, wherein the server computer is further caused to generate, with the processor, the widget layout prior to said automatic adaptation of the widget layout.

13. A computer program product comprising a non-transitory computer useable storage device having a computer readable program, wherein the computer readable program when executed on a mobile computing device causes the mobile computing device to:
receive, with a receiver through a network, a widget layout indicating an order for a plurality of widgets within a graphical user interface;
render, at a display device integrated within the mobile computing device, the widget layout;
obtain user activity data with respect to the widget layout during said rendering;
transmit, with a transmitter, the user activity data to an augmented intelligence system that generates an adapted widget layout according to the user activity data;
receive, with the receiver, the adapted widget layout; and
render, with the display device, the adapted widget layout.

14. The computer program product of claim 13, wherein the mobile computing device is further caused to obtain the user activity data by performing image capture, with an image capture device, of a user interaction with the widget layout during said rendering of the widget layout.

15. The computer program product of claim 13, wherein the mobile computing device is further caused to obtain the user activity data by performing audio capture, with an audio capture device, of a user interaction with the widget layout during said rendering of the widget layout.
